# EUROPEAN PATENT APPLICATION

(11) **EP 4 769 667 A1**
(43) Date of publication of application: **01.07.2026**
(21) Application number: 25867219.5
(22) Date of filing: 04.09.2025
(51) Int. Cl.: H01M 10/6567, H01M 10/613, H01M 10/625, H01M 50/249, H01M 50/30, H01M 50/289, H01M 50/271

(54) **BATTERY MODULE, BATTERY PACK COMPRISING SAME, AND VEHICLE**

(30) Priority: 30.09.2024 KR 20240132520
(71) Applicant: LG Energy Solution, Ltd., Seoul 07335 (KR)
(72) Inventor: JANG, Sunghwan, Daejeon 34122 (KR); PARK, Myungki, Daejeon 34122 (KR)
(74) Representative: Plasseraud IP
(86) International application number: PCT/KR2025/013699
(87) International publication number: WO 2026/071547

(57) **Abstract**

A battery module according to one embodiment of the present invention includes a cell assembly including a plurality of battery cells, a lower housing having an internal space to accommodate the cell assembly, a coolant accommodated in the lower housing, an upper housing mounted on a top of the lower housing and including at least one venting hole, and a sealing bracket configured to seal between an outer surface of the cell assembly and an inner surface of the lower housing.

## Description

### [TECHNICAL FIELD]

The present disclosure relates to a battery module, a battery pack comprising same, and a vehicle.

### [BACKGROUND ART]

A secondary battery, unlike a primary battery that is not rechargeable, refers to a battery that is capable of being repeatedly charged and discharged, and is applied not only to portable devices but also to electric vehicles (EVs), hybrid electric vehicles (HEVs), and others that are powered by electric drive sources.

Types of secondary batteries that are widely used at present include lithium ion batteries, lithium polymer batteries, nickel cadmium batteries, nickel hydride batteries, and nickel zinc batteries. The operating voltage of such a unit secondary battery cell, *e.g.*, a unit battery cell, ranges from approximately 2.5 V to 4.6 V. Therefore, when a higher output voltage is required than the voltage of the unit secondary battery cell, multiple battery cells are connected in series to constitute a battery pack. Additionally, multiple battery cells may be connected in parallel to constitute a battery pack according to the charge/discharge capacity required for the battery pack. Accordingly, the number of battery cells included in the battery pack may be set in various ways according to the required output voltage or charge/discharge capacity.

When multiple battery cells are connected in series or in parallel to constitute a battery pack, it is common to first make up a battery module using at least one battery cell, or multiple battery cells, and then constitute a battery pack by using the at least one battery module and further adding other components. Here, the battery module refers to a component in which multiple battery cells are connected in series or in parallel, while the battery pack refers to a component in which multiple battery modules are connected in series or in parallel in order to enhance the capacity and output thereof.

There is an increasing need to meet customer demands for satisfaction of high-speed charging and safety against thermal propagation of battery packs. However, in the case of conventional battery modules or packs, there has been a problem in that the performance of high-speed charging is degraded since heat generation is controlled mainly through an indirect cooling such as an edge cooling.

In the meantime, in order to apply a direct cooling method for improving the high-speed charging performance, a sealing structure may be ensured, but such a sealing structure has a problem in that it is difficult to ensure safety against thermal propagation when a thermal event occurs. For example, in a direct cooling structure using a coolant immersion, sealing of the entire battery module is a prerequisite to ensure that the insulating coolant remains inside the battery module. However, when the entire battery module is sealed in this way, there is a problem in that the risk of explosion of the battery module becomes very high since there is no space for a high-temperature gas to be vented when a thermal event occurs.

### [SUMMARY OF THE INVENTION]

### [TECHNICAL PROBLEM]

The present disclosure improves the high-speed charging performance of a battery module.

Further, the present disclosure improves the cooling performance for a battery module by applying a direct cooling structure.

Furthermore, the present disclosure ensures safety by smoothly discharging a venting gas to the outside of a battery module when a thermal event occurs in the battery module.

However, the technical issues to be addressed by the present disclosure are not limited to those described above, and other problems not mentioned may be clearly understood by those skilled in the art from the following description of the present disclosure.

### [SOLUTION TO THE PROBLEM]

A battery module according to one embodiment of the present disclosure includes: a cell assembly including a plurality of battery cells; a lower housing having an internal space to accommodate the cell assembly; a coolant accommodated in the lower housing; an upper housing mounted on a top of the lower housing and including at least one venting hole; and a sealing bracket configured to seal between an outer surface of the cell assembly and an inner surface of the lower housing.

The cell assembly may include: the plurality of battery cells; a cell assembly case surrounding and accommodating the plurality of battery cells; and a through-hole provided in at least a partial region of the cell assembly case.

The sealing bracket may be positioned in a region above a surface of the coolant.

The lower housing may include a coolant inlet and a coolant outlet.

The coolant inlet and the coolant outlet may be positioned in a region below the sealing bracket.

The venting gas may be adapted to be vented from a region above the sealing bracket.

The sealing bracket may include: a base section having a receiving portion configured to allow the cell assembly to pass through; and a sealing section configured to come into contact with the inner surface of the lower housing and to seal the region below the sealing bracket.

The receiving portion may be configured to seal the region below the sealing bracket.

An edge of the sealing bracket may be configured to have an upwardly curved structure.

The sealing bracket may further include an inclined section between the base section and the sealing section.

The sealing section may be configured to be interposed between the lower housing and the upper housing.

The sealing bracket may include an elastic material.

The present disclosure provides a battery pack including at least one battery module according to the above-described embodiment.

In addition, the present disclosure provides a vehicle including at least one battery pack according to the above-described embodiment.

### [EFFECTS OF THE INVENTION]

According to the present disclosure, it is possible to improve the high-speed charging performance of a battery module.

Further, according to the present disclosure, it is possible to improve the cooling performance for a battery module by applying a direct cooling structure.

Furthermore, according to the present disclosure, it is possible to ensure safety by smoothly discharging a venting gas to the outside of a battery module when a thermal event occurs in the battery module.

However, the effects obtainable through the present disclosure are not limited to those described above, and other technical effects not mentioned may be clearly understood by those skilled in the art from the following description of the disclosure.

### [BRIEF DESCRIPTION OF DRAWINGS]

The following drawings attached hereto exemplify embodiments of the present disclosure and serve to help further understanding of the technical idea of the present disclosure together with the detailed description of the disclosure to be described later. Therefore, the present disclosure should not be construed as being limited to the matters illustrated in the drawings.
FIG. 1 is a diagram illustrating a battery module according to one embodiment of the present disclosure.
FIG. 2 is an exploded perspective view of the battery module of FIG. 1.
FIG. 3 is a diagram illustrating a cell assembly according to one embodiment of the present disclosure.
FIG. 4 is a diagram illustrating a battery cell included in the cell assembly of FIG. 3.
FIG. 5 is a diagram illustrating a sealing bracket according to one embodiment of the present disclosure.
FIG. 6 is a diagram illustrating the sealing bracket according to another embodiment of the present disclosure.
FIG. 7 is a cross-sectional view of the battery module of FIG. 1 taken along line A-A'.
FIG. 8 is a cross-sectional view of the battery module of FIG. 1 taken along line B-B'.
FIG. 9 is an enlarged view of a partial region of a battery module according to one embodiment of the present disclosure.
FIG. 10 is a diagram illustrating a battery module according to another embodiment of the present disclosure.
FIG. 11 is a diagram illustrating a battery pack including the battery module of FIG. 1.
FIG. 12 is a diagram illustrating a vehicle including the battery pack of FIG. 11.

### [MODES FOR CARRYING OUT THE INVENTION]

The advantages and features of the present disclosure, as well as methods for achieving them will become apparent by referring to embodiments described in detail below in conjunction with the accompanying drawings. However, the present disclosure is not limited to the embodiments disclosed below but will be implemented in various different forms, and these embodiments are provided merely to ensure a complete understanding of the present disclosure and to inform those skilled in the art to which the present disclosure pertains of the scope of the present disclosure, and the present disclosure is defined solely by the scope of the claims. Accordingly, in some embodiments, well-known process steps, well-known device structures, and well-known techniques are not specifically described in order to avoid ambiguity in interpreting the present disclosure. The same reference numerals refer to the same components throughout the specification.

In the drawings, the thicknesses of various layers and regions may be exaggerated for clarity. Similar parts are designated by the same reference numerals throughout the specification. When a part such as a layer, film, region, or plate is described as being "above" another part, this includes not only the case of being "directly above" the other part but also the case where another part is interposed therebetween. Conversely, when a part is described as being "directly above" another part, it may mean that no other part is interposed therebetween. Also, when a part such as a layer, film, region, or plate is described as being "under" another part, this includes not only the case of being "directly under" the other part but also the case where another part is interposed therebetween. Conversely, when a part is described as being "directly under" another part, it may mean that no other part is interposed therebetween.

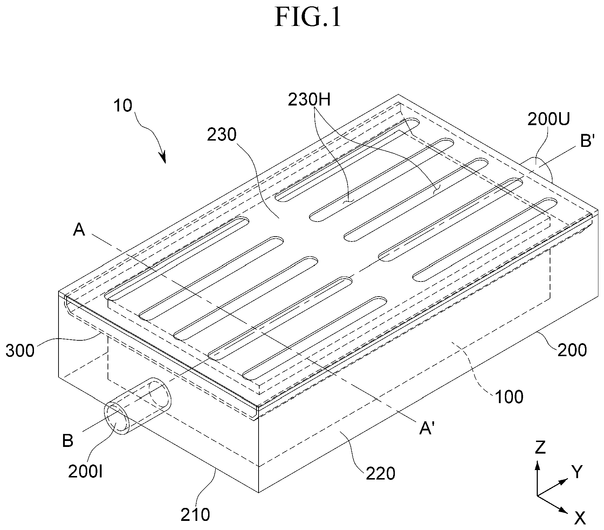

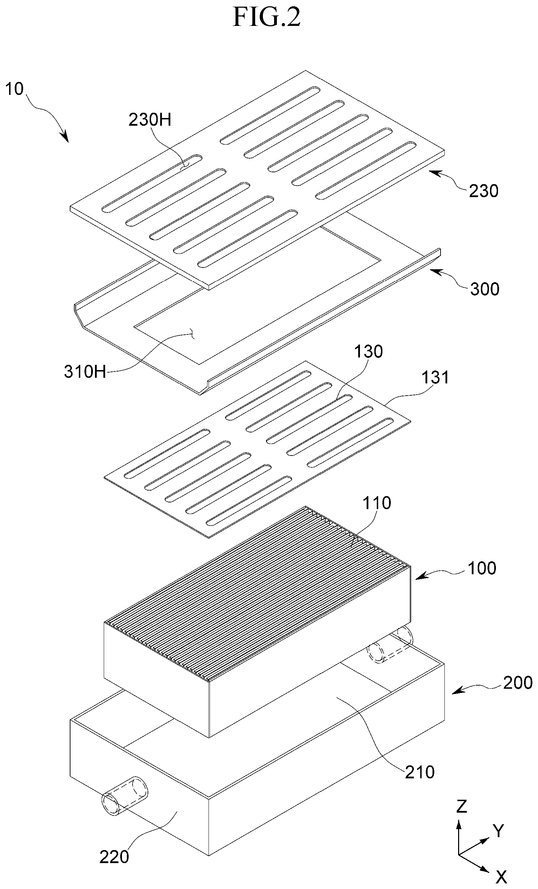

FIG. 1 is a diagram illustrating a battery module 10 according to one embodiment of the present disclosure, and FIG. 2 is an exploded perspective view of the battery module 10 of FIG. 1.

Referring to FIGS. 1 and 2, the battery module 10, according to the present disclosure, includes a cell assembly 100, a lower housing 200, a coolant C, an upper housing 230, and a sealing bracket 300.

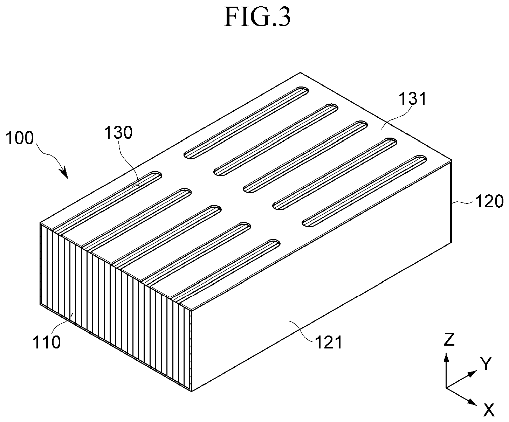

FIG. 3 is a diagram illustrating the cell assembly 100, according to one embodiment of the present disclosure.

The cell assembly 100 may include a plurality of battery cells 110, a cell assembly case 120, and a through-hole 130.

The plurality of battery cells 110 may be stacked in at least one direction. According to an embodiment, the plurality of battery cells 110 may be stacked in at least the horizontal direction. For example, the plurality of battery cells 110 may be configured to be arranged side by side in the left-right direction in a state of being erected in the up-down direction. In FIG. 3, the plurality of battery cells 110 may be configured to be arranged side by side in the X-axis direction in a state of being erected in the Z-axis direction.

Hereinafter, each of the plurality of battery cells 110 will be described in more detail.

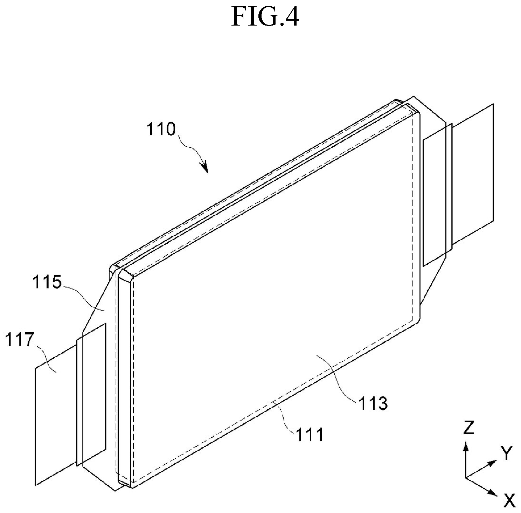

FIG. 4 is a diagram illustrating the battery cell 110 included in the cell assembly 100 of FIG. 3.

Referring to FIG. 4, the battery cell 110 may be a secondary battery, and, for example, may be a pouch-type battery cell 110. However, the type of the battery cell 110 is not limited thereto, and other types of battery cells 110, such as a cylindrical cell and a prismatic cell, may also be employed in the battery module 10 of the present disclosure. The battery cell 110 of the present disclosure may be applied without restrictions to the cell form-factor.

Hereinafter, as illustrated in FIG. 4, a case where the battery cell 110 is a pouch-type cell will be described as an example. Referring to FIG. 4, the battery cell 110 may include an electrode assembly 111, an accommodation region 113 for accommodating the electrode assembly 111, a sealing region 115 formed on the periphery of the accommodation region 113, and a pair of electrode leads 117 connected to the electrode assembly 111 and drawn out in opposite directions to each other to the outside of the sealing region 115.

The pair of electrode leads 117 may be coupled with electrode tabs (not illustrated) provided in the electrode assembly 111, and may be drawn through the sealing region 115 to the outside of the sealing region 115. The pair of electrode leads 117 may be shaped to extend in the longitudinal direction of the battery cell 110. The pair of electrode leads 117 may be drawn out in the same direction or in opposite directions to each other.

Referring to FIG. 4, the battery cell 110 may be configured to discharge a venting gas through the upper sealing region 115. The upper sealing region 115 may have a venting region formed to prevent or suppress an increase of the internal pressure caused by a gas generated inside the battery cell 110. The venting region is formed in a part of the upper sealing region 115 and corresponds to a structurally weaker region than the surrounding region so as to be easily broken when an internal pressure is applied. The venting region may be, for example, a region in which sealing is made weaker than the surrounding region. In this case, the venting region may be formed on one of opposite corners of the upper sealing region 115. For example, the venting region may be formed on an upper corner among opposite corners of the sealing region 115.

With such a structure, a gas generated inside the battery cell 110 may be discharged to the outside of the battery cell 110 through the venting region formed at the upper end of the battery cell 110. This enables the gas to be discharged to the outside of the battery module 10 by way of the upper housing 230 located on the upper side of the battery cell 110. With such a structure, a high-temperature gas and flames inside the battery module 10 may be smoothly discharged to the outside.

Referring back to FIG. 3, the cell assembly case 120 may accommodate the plurality of battery cells 110. The cell assembly case 120 may be configured to surround and accommodate the plurality of battery cells 110. For example, a predetermined number of battery cells 110 may be defined as a cell block. In this case, a single cell block may be covered by the cell assembly case 120. For example, the cell assembly case 120 may function as a case that surrounds the plurality of battery cells 110.

The cell assembly case 120 may include a lower case 121 and an upper cover 131. For example, the lower case 121 may be configured to have a space so as to accommodate the battery cells 110 therein. For example, the lower case 121 may take the form of a box having an internal space. The lower case 121 may include, for example, a plastic material or a metal material. The lower case 121 may function to protect the cell assembly 100 from external impacts. Accordingly, the material of the lower case 121 may be rigid, but is not limited thereto.

The lower case 121 may also function to isolate the plurality of battery cells 110 accommodated therein from the outside. For example, the lower case 121 may protect the plurality of battery cells 110 from the outside of the lower case 121. For example, when there is the coolant C outside the lower case 121, the lower case 121 may block the direct contact of the coolant C with the battery cells 110. In this case, the lower case 121 may function as a heat transfer member between the battery cells 110 and the coolant C.

In the meantime, the upper cover 131 may be configured to cover an upper opening of the lower case 121. For example, the upper cover 131 may take the form of a lid having an approximately plate shape.

At least one through-hole 130 may be provided in at least a partial region of the cell assembly case 120. For example, at least one through-hole 130 may be provided in at least a partial region of the upper cover 131. The through-hole 130 may be shaped, for example, to be elongated in one direction. According to one embodiment, the through-hole 130 may be shaped to be elongated along the sealing region 115 of the battery cell 110. With such a structure, a high-temperature gas and flames inside the cell assembly 100 may be smoothly discharged to the outside. The through-hole 130 may be formed in plural on the upper cover. For example, a plurality of through-holes 130 may be provided on the upper cover 131 along the sealing region 115 of the battery cell 110. With such a structure, even when a large amount of gas is generated inside the cell assembly 100, the gas may be smoothly discharged to the outside of the cell assembly case 120 through the plurality of through-holes 130. With this configuration, the residence time of the venting gas inside the cell assembly case 120 may be minimized.

Referring back to FIGS. 1 and 2, the lower housing 200 may have an internal empty space, so that the cell assembly 100 may be accommodated in the internal space. The lower housing 200 may be configured to accommodate the cell assembly 100. For example, the lower housing 200 may have an internal space to accommodate the cell assembly 100.

The lower housing 200 may include the base plate 210 extending in the horizontal direction and the side plate 220 extending upward from the base plate 210. In this case, the base plate 210 may take the form of a plate extending in an approximately horizontal direction. The side plate 220 may take the form of a plate extending in an approximately vertical direction. The side plate 220 may be configured perpendicular to the base plate 210.

In another aspect of the present disclosure, the base plate 210 and the side plate 220 may be integrally configured. Alternatively, the base plate 210 and the side plate 220 may be configured to be detachable.

The coolant C may be accommodated in the lower housing 200. The coolant C may have insulating properties. For example, after the cell assembly 100 is accommodated in the internal space of the lower housing 200, the coolant C may be accommodated in the space between the lower housing 200 and the cell assembly 100. With such a structure, the contact area between the cell assembly 100 and the coolant C may be maximized, thereby improving the cooling efficiency.

Referring back to FIGS. 1 and 2, the lower housing 200 may include a coolant inlet 200I and a coolant outlet 200U.

The coolant inlet 200I and the coolant outlet 200U may be formed in the side plate 220 of the lower housing 200, through which the coolant C may flow in and out. The lower housing 200 may be in an airtight state except for the coolant inlet 200I and the coolant outlet 200U since the coolant C passes through the inside of the lower housing 200. Thus, the coolant C flowing into the coolant inlet 200I is not leaked to the outside of the lower housing 200. Meanwhile, the coolant C flowing into the lower housing 200 through the coolant inlet 200I may flow out through the coolant outlet 200U after cooling the cell assembly 100 accommodated in the lower housing 200. Accordingly, the coolant C may perform cooling through a direct contact with the cell assembly 100 contained in the lower housing 200, thereby improving the cooling efficiency. With such a configuration, an efficient cooling may be performed during heat generation of the battery module 10 due to high-speed charging and other reasons. This may ensure the high-speed charging performance of the battery module 10.

Referring back to FIGS. 1 and 2, the upper housing 230 may be positioned on at least one side of the lower housing 200. For example, the upper housing 230, as a top plate of the housing of the battery module 10, may be mounted on the top of the lower housing 200. The upper housing 230 may be configured to cover the top of the cell assembly 100. For example, the upper housing 230 may take the form of a plate extending in an approximately horizontal direction. In one aspect of the present disclosure, the upper housing 230 may be configured to be detachable from the lower housing 200.

In another aspect of the present disclosure, the upper housing 230 may be configured to discharge the venting gas. For example, the upper housing 230 may include at least one venting hole 230H.

The venting hole 230H of the upper housing 230 may be configured to discharge the venting gas. The venting hole 230H may take the form of a hole penetrating the upper housing 230 in the up-down direction. The venting hole 230H may be shaped to be elongated along the sealing region 115 of the battery cell 110. With such a structure, a high-temperature gas and flames inside the battery module 10 may be smoothly discharged to the outside. According to one embodiment, the venting hole 230H may be formed in a plurality on the upper housing 230. For example, the venting hole 230H may be provided in a plurality on the upper housing 230 along the sealing region 115 of the battery cell 110, and may be provided in a plurality in the stacking direction (*e.g.,* an X-axis direction) of the battery cells 110. The venting hole 230H may extend in the longitudinal direction (*e.g.,* a Y-axis direction) of the battery cell 110.

With such a structure, even if a large amount of gas is generated inside the battery module 10, the gas may be smoothly discharged to the outside of the battery module 10 through the through-hole 130 of the cell assembly case 120 and the plurality of venting holes 230H of the upper housing 230. As a result, the residence time of the venting gas inside the lower housing 200 may be minimized.

In another aspect of the present disclosure, the venting hole 230H of the upper housing 230 may include a mesh. With such a structure, the mesh may prevent sparks generated in the cell assembly 100 from scattering outside the cell assembly 100. In addition, the mesh may prevent fire propagation from the battery module 10 in which a thermal event has occurred to an adjacent battery module 10.

Referring back to FIGS. 1 and 2, the sealing bracket 300 may be interposed between the lower housing 200 and the upper housing 230. According to one embodiment, the sealing bracket 300 may be configured to seal between the outer surface of the cell assembly case 120 and the inner surface of the lower housing 200. The sealing bracket 300 may serve to divide the internal space of the lower housing 200 into two regions. For example, a region below the sealing bracket 300 may be defined as a first space A1, and a region above the sealing bracket 300 may be defined as a second space A2. The first space A1 and the second space A2 are separated by the sealing bracket 300. Accordingly, the first space A1 and the second space A2 may be in a state where the movement of a gas and/or a liquid is not possible therebetween. According to one embodiment, the sealing bracket 300 may be configured such that the region below the sealing bracket 300 is in an airtight state (liquid-tight state).

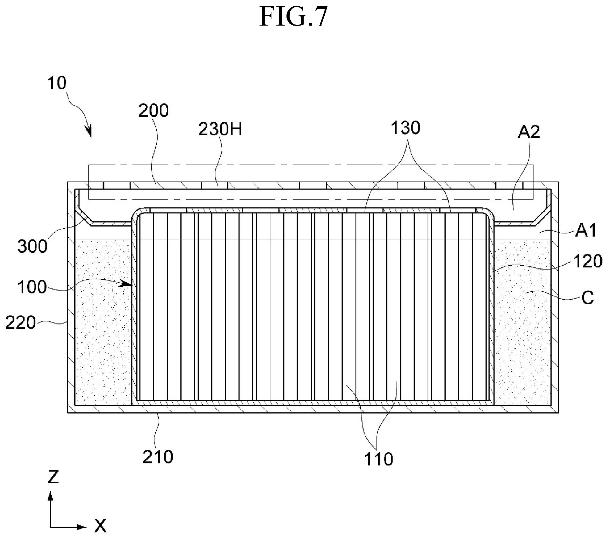

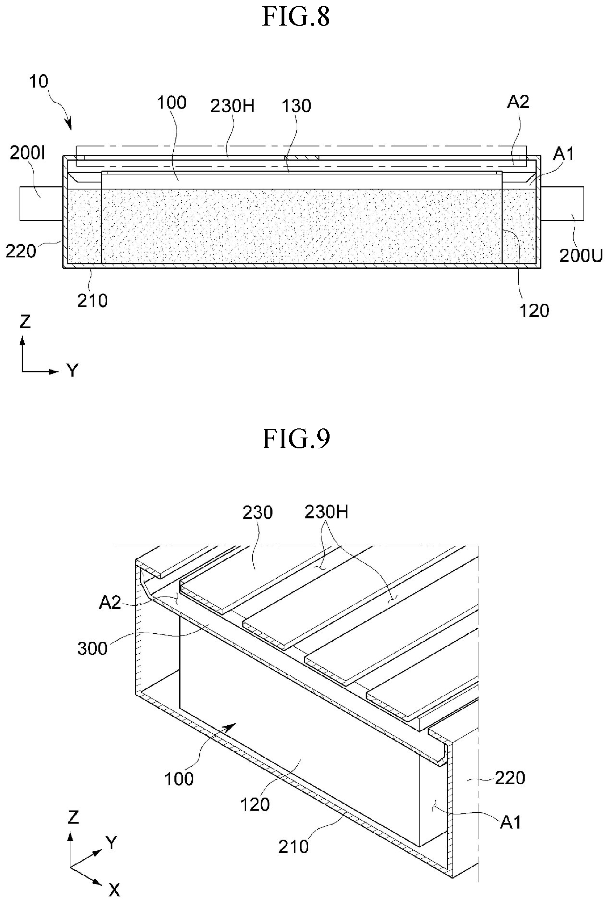

Referring to FIGS. 7 and 8, in one aspect of the present disclosure, the sealing bracket 300 may be positioned in a region above the surface of the coolant C flowing through the lower housing 200. In other words, the coolant C may be adapted to be accommodated only in the first space A1, which is the region below the sealing bracket 300 inside the lower housing 200. In this case, the coolant C is not accommodated in the second space A2, which is the region above the sealing bracket 300. Accordingly, the coolant C may cool the cell assembly 100 only in the first space A1. The first space A1 may correspond to a cooling zone.

Meanwhile, the coolant inlet 200I and the coolant outlet 200U may be located in the region below the sealing bracket 300. Since the coolant C exists only in the region below the sealing bracket 300, the coolant inlet 200I and the coolant outlet 200U are also positioned in the region below the sealing bracket 300.

The venting gas may be adapted to be vented from the region above the sealing bracket 300. According to one embodiment, the venting gas may be discharged to the outside of the battery module 10 through at least one through-hole 130 provided in the top of the cell assembly case 120.

With the above configuration, the sealing bracket 300 ensures the sealing force of the housing 200 and 230 of the battery module 10, while allowing smooth venting even when a thermal event occurs inside the battery module 10. With such a configuration of the present disclosure, both the sealing force and venting performance of the battery module 10 may be satisfied.

As described above, the coolant C does not flow into the second region, which is the region above the sealing bracket 300, due to the sealing effect. Accordingly, the coolant C may be effectively prevented or suppressed from flowing into the through-hole 130 for the discharge of the venting gas, which is positioned in the second region, which is the region above the sealing bracket 300 inside the lower housing 200. Further, since the sealing bracket 300 seals the first region inside the lower housing 200, the coolant C may be effectively prevented or suppressed from flowing to the outside through the venting hole 230H of the upper housing 230. With this configuration, the sealing force of the battery module 10 may be ensured. At the same time, when a thermal event occurs inside the battery module 10 and a large amount of gas is generated, the gas may be discharged into the second space A2, which is the region above the sealing bracket 300, through the through-hole 130 provided in the cell assembly case 120. Thereafter, the venting gas in the second space A2 may be smoothly discharged to the outside of the battery module 10 through the venting hole 230H provided in the upper housing 230. For example, the second space A2 may correspond to a venting zone.

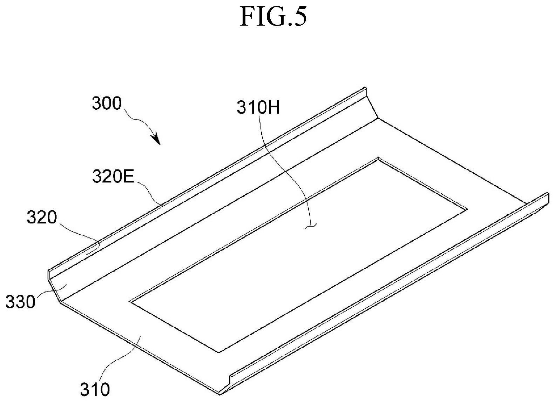

FIG. 5 is a diagram illustrating the sealing bracket 300 according to one embodiment of the present disclosure.

Referring to FIG. 5, the sealing bracket 300 includes a base section 310 and a sealing section 320. The sealing bracket 300 may further include an inclined section 330 between the base section 310 and the sealing section 320. The sealing bracket 300 may include an elastic material. For example, the sealing bracket 300 may include a rubber material. In one embodiment of the present disclosure, an elastic material may be applied to the sealing section 320 and the receiving portion 310H of the sealing bracket 300.

The base section 310 may be configured as a plate-shaped structure extending in an approximately horizontal direction. The sealing bracket 300 may include a receiving portion 310H configured to allow the cell assembly 100 to pass through the base section 310. For example, the receiving portion 310H is disposed in a central region of the base section 310.

In one aspect of the present disclosure, the receiving portion 310H may be configured to seal the region below the sealing bracket 300. For example, when the cell assembly 100 is inserted into in the receiving portion 310H, no gap is created between the cell assembly 100 and the receiving portion 310H. For example, the receiving portion 310H may come into close contact with the cell assembly 100 without any gap, thereby reliably separating the first space A1 from the second space A2. This may ensure the sealing performance (*e.g.,* a liquid-tightness) of the first region.

Meanwhile, referring to FIG. 5, an edge region of the base section 310 where the sealing section 320 does not extend may also be configured to come into close contact with the lower housing 200, thereby maintaining the airtightness of the first space A1. In this case, an elastic material may be applied to the edge region of the base section 310 of the sealing bracket 300 where the sealing section 320 does not extend.

In another aspect of the present disclosure, the sealing section 320 may come into contact with the inner surface of the lower housing 200. The sealing section 320 may be configured to seal the region below the sealing bracket 300. The sealing bracket 300 may seal and isolate the region below the sealing bracket 300 from the region above the sealing bracket 300. Accordingly, the coolant C may be sealed within the region below the sealing bracket 300 by the sealing bracket 300. For example, the sealing section 320 prevents the coolant C from moving into the second space A2.

In another embodiment of the present disclosure, the sealing section 320 may be configured to extend in all directions from the edge of the receiving portion 310H. For example, when the receiving portion 310H takes the form of a plate having an approximately rectangular structure, the sealing section 320 may be provided to extend from each of four corners of the rectangle. In such an embodiment, the sealing section 320 may come into contact with and seal all side plates 220 constituting the lower housing 210 and 220. With the above configuration, the sealing force of the sealing bracket 300 may be further improved.

According to one embodiment, the edge of the sealing bracket 300 may be configured to have an upwardly curved structure. For example, the sealing section 320 may be configured to have an upwardly curved structure. For example, referring to FIG. 5, the sealing section 320 may be configured parallel to the side surface of the lower housing 200. For example, the sealing section 320 may be configured to be in surface contact with the lower housing 200. With such a configuration, the sealing force of the sealing bracket 300 may be improved by the surface contact between the sealing section 320 and the lower housing 200.

In yet another aspect of the present disclosure, the sealing bracket 300 may further include the inclined section 330 between the base section 310 and the sealing section 320.

Referring to FIG. 5, the receiving portion 310H may extend in an approximately horizontal direction, and the sealing section 320 may extend in an approximately vertical direction. Accordingly, the connection region between the receiving portion 310H and the sealing section 320 may have an approximately inclined structure. For example, the inclined section 330 may be structured to extend from the edge of the base section 310 toward the sealing section 320.

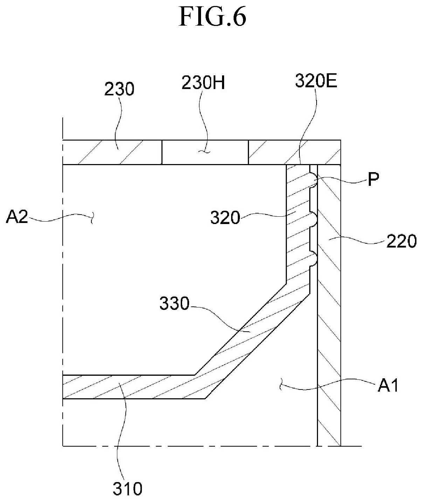

FIG. 6 is a diagram illustrating the sealing bracket 300 according to another embodiment of the present disclosure.

Referring to FIG. 6, the sealing section 320 may include at least one protrusion P. The sealing section 320 may include a plurality of protrusions P. The protrusion P may protrude in a direction from the sealing section 320 toward the inner surface of the lower housing 200. The protrusion P may be configured, for example, such that the width thereof decreases in a direction from the sealing section 320 toward the inner surface of the lower housing 200. The protrusion P may be shaped, for example, to extend in a direction parallel to the longitudinal direction (*e.g.,* a Y-axis direction) of the battery module 10.

According to the above configuration, the sealing performance between the sealing bracket 300 and the lower housing 200 may be further improved.

FIG. 7 is a cross-sectional view of the battery module 10 of FIG. 1 taken along line A-A', and FIG. 8 is a cross-sectional view of the battery module 10 of FIG. 1 taken along line B-B'. FIG. 9 is an enlarged view of a partial region of the battery module according to one embodiment of the present disclosure.

Referring to FIGS. 7 to 9, the cell assembly 100 is accommodated inside the lower housing 200, and the coolant C may be accommodated in the space between the cell assembly 100 and the lower housing 200. With such a structure, the contact area between the cell assembly 100 and the coolant C may be maximized, thereby improving the cooling efficiency.

The sealing bracket 300 may be interposed between the lower housing 200 and the upper housing 230. The sealing bracket 300 may be configured to seal between the outer surface of the cell assembly 100 and the inner surface of the lower housing 200. For example, the sealing bracket 300 may be configured to seal between the outer surface of the cell assembly case 120 and the inner surface of the lower housing 200. The first space A1 and the second space A2 are separated from each other by the sealing bracket 300. The sealing bracket 300 maintains the region below the sealing bracket 300 in an airtight (*e.g.,* liquid-tight) state. According to the present disclosure, an airtight condition, which is a prerequisite for applying a direct cooling method to the region below the sealing bracket 300, may be achieved. This may realize an improvement in cooling efficiency associated with direct cooling.

Meanwhile, when a thermal event occurs inside the battery module 10 and a gas is generated, the venting gas may be vented from the region above the sealing bracket 300. For example, the venting gas may be discharged to the outside through at least one through-hole 130 provided on the top of the cell assembly case 120.

In this case, since the sealing bracket 300 seals the first region, the coolant C may be effectively prevented or suppressed from flowing to the outside through the venting hole 230H of the upper housing 230. With this configuration, the sealing force of the battery module 10 may be ensured. At the same time, when a thermal event occurs inside the battery module 10 and a large amount of gas is generated, the gas may be discharged into the second space A2, which is the region above the sealing bracket 300, through the through-hole 130 provided in the cell assembly case 120. Thereafter, the venting gas in the second space A2 may be smoothly discharged to the outside of the battery module 10 through the venting hole 230H provided in the upper housing 230.

With the above configuration, the sealing bracket 300 may ensure the sealing force of the battery module 10, while allowing smooth venting even when a thermal event occurs inside the battery module 10. According to the present disclosure, both the sealing force and the venting performance may be satisfied. For example, according to the sealing structure of the present disclosure, safety may be ensured even when thermal propagation occurs.

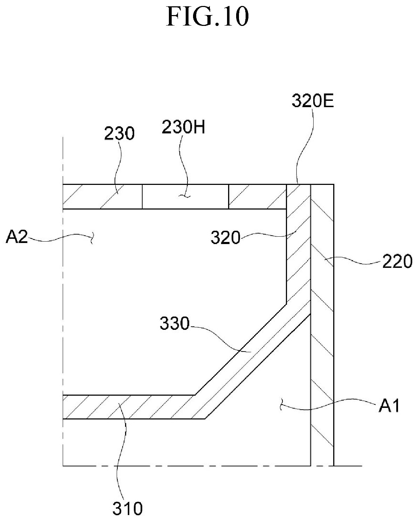

FIG. 10 is a diagram illustrating the sealing bracket 300 of the battery module 10 according to another embodiment of the present disclosure.

Referring to FIG. 10, the sealing section 320 may be configured to be interposed between the lower housing 200 and the upper housing 230. In the present embodiment, a distal end 320E of the sealing section 320 may be configured to be exposed to the outside of the battery module 10. For example, the distal end 320E of the sealing section 320 may be interposed between the upper housing 230 and the lower housing 200 of the battery module 10. The distal end 320E of the sealing section 320 may be interposed between the upper housing 230 and the side plate 220 of the lower housing 200 of the battery module 10.

With such a structure, since the sealing section 320 comes into contact with both the upper housing 230 and the lower housing 200, sealing may be applied multiple times. Furthermore, with the above structure, since the sealing bracket 300 physically isolates the first space A1 from the second space A2, the leakage possibility of the coolant C is further reduced. With the above configuration, the airtight performance (*e.g.,* liquid-tightness) of the coolant C may be further improved.

Meanwhile, the structure applied to the sealing bracket 300 of the present disclosure may be applied not only to a top venting structure but also to a bottom venting structure.

For example, the sealing bracket 300 of the present disclosure may also be applied to a structure in which the venting region 115 of the battery cell 110 is positioned toward the bottom of the battery module 10, rather than toward the top of the battery module 110. In this case, since venting is performed from a lower region of the battery module 10, the through-hole 130 of the cell assembly 100 may also be positioned toward the bottom of the battery module 10. Additionally, the sealing bracket 300 may also be provided in a region adjacent to the region where the through-hole 130 is positioned. In this case, the sealing section 320 of the sealing bracket 300 may be configured to extend toward the bottom of the battery module 10. In this case as well, the venting hole 320H of the battery module 10 may be provided on the base plate 210 of the battery module 10. In such a structure, the coolant C may be accommodated in the region above the sealing bracket 300.

As described above, the present disclosure is not limited to a top venting structure illustrated in FIGS. 1 to 10 but is equally applicable to a bottom venting structure in which venting is performed downward.

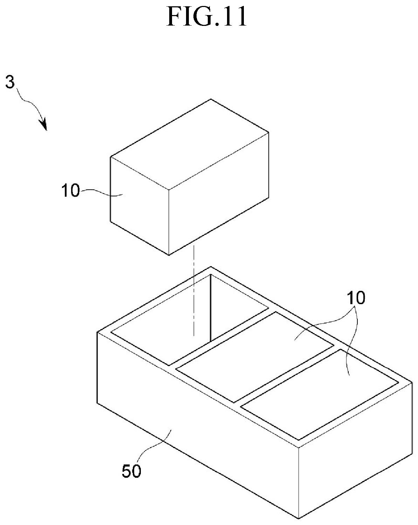

FIG. 11 is a diagram illustrating a battery pack 3 including the battery module 10 of FIG. 1.

Referring to FIG. 11, the battery pack 3 according to the present disclosure may include at least one battery module 10 according to the present disclosure described above. In addition, the battery pack 3 according to the present disclosure may include a pack case 50 capable of accommodating the at least one battery module 10. In addition, the battery pack 3 according to the present disclosure may further include various other components, such as a battery management system (BMS), a pack case, a relay, and a current sensor, which are known components of the battery pack 3 at the time of filing of the present disclosure, in addition to the battery module 10.

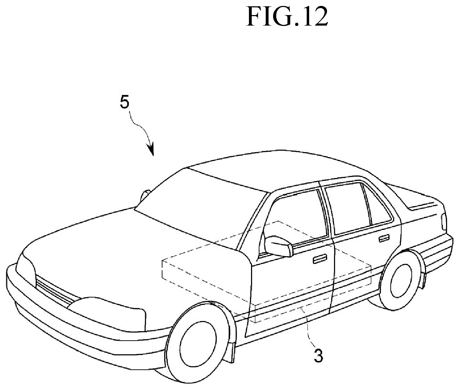

FIG. 12 is a diagram illustrating a vehicle 5 including the battery pack 3 of FIG. 11.

Referring to FIG. 12, the vehicle 5 according to the present disclosure may include at least one battery pack 3 according to the present disclosure.

The battery module 10 according to the present disclosure may be applied to the vehicle 5, such as an electric vehicle 5 or a hybrid vehicle 5. The vehicle 5 according to the present disclosure may include the battery module 10 according to the present disclosure or the battery pack 3 according to the present disclosure. Further, the vehicle 5 according to the present disclosure may include various other components included in the vehicle 5, in addition to the battery module 10 or the battery pack 3. For example, the vehicle 5 according to the present disclosure may further include components such as a vehicle body, a motor, and a control device such as an electronic control unit (ECU), in addition to the battery module 10 according to the present disclosure.

Meanwhile, in this specification, terms indicating directions such as "upper" and "lower" are used merely for the sake of convenience in description, but it is apparent to those skilled in the art of the present disclosure that these terms may vary depending on factors such as the position of a target object and the position of an observer.

In the above description, although the present disclosure has been described by limited embodiments and drawings, the above description is merely an example of the technical idea of the present disclosure, and those skilled in the art will appreciate that various modifications and variations may be made without departing from the essential characteristics of the present disclosure.

### [INDUSTRIAL APPLICABILITY]

The present invention can provide a battery module with improved high-speed charging performance and improved cooling performance by applying a direct cooling structure.

## Claims

1. A battery module comprising:
a cell assembly including a plurality of battery cells;
a lower housing having an internal space configured to accommodate the cell assembly;
a coolant accommodated in the lower housing;
an upper housing mounted on a top of the lower housing and including at least one venting hole; and
a sealing bracket configured to seal between an outer surface of the cell assembly and an inner surface of the lower housing.

2. The battery module according to claim 1, wherein
the cell assembly includes:
the plurality of battery cells;
a cell assembly case surrounding and accommodating the plurality of battery cells; and
a through-hole provided in at least a partial region of the cell assembly case.

3. The battery module according to claim 1, wherein
the sealing bracket is positioned in a region above a surface of the coolant inside the lower housing.

4. The battery module according to claim 1, wherein
the lower housing includes a coolant inlet and a coolant outlet.

5. The battery module according to claim 4, wherein
the coolant inlet and the coolant outlet are positioned in a region below the sealing bracket.

6. The battery module according to claim 1, wherein
a venting gas is adapted to be vented from a region above the sealing bracket.

7. The battery module according to claim 1, wherein
the sealing bracket includes:
a base section having a receiving portion configured to allow the cell assembly to pass through; and
a sealing section configured to come into contact with the inner surface of the lower housing and to seal the region below the sealing bracket.

8. The battery module according to claim 7, wherein
the receiving portion is configured to seal the region below the sealing bracket.

9. The battery module according to claim 1, wherein
an edge of the sealing bracket is configured to have an upwardly curved structure.

10. The battery module according to claim 7, wherein
the sealing bracket further includes an inclined section between the base section and the sealing section.

11. The battery module according to claim 7, wherein
the sealing section is configured to be interposed between the lower housing and the upper housing.

12. The battery module according to claim 1, wherein
the sealing bracket includes an elastic material.

13. A battery pack comprising at least one battery module according to any one of claims 1 to 12.

14. A vehicle comprising at least one battery pack according to claim 13.
